Europäisches Patentamt

European Patent Office

Office européen des brevets

(11) Publication number: **0 279 232**
**A2**

# EUROPEAN PATENT APPLICATION

(21) Application number: **88101086.2**

(51) Int. Cl.⁴: **G06F 15/16**

(22) Date of filing: **26.01.88**

(30) Priority: **13.02.87 US 14884**

(43) Date of publication of application:
**24.08.88 Bulletin 88/34**

(84) Designated Contracting States:
**DE FR GB**

(71) Applicant: **International Business Machines Corporation**
**Old Orchard Road**
**Armonk, N.Y. 10504(US)**

(72) Inventor: **Henson, Larry William**
**4207 Avenue G.**
**Austin Texas 78751(US)**
Inventor: **Shaheen-Gouda, Amal Ahmed**
**11502 Sweetshade Lane**
**Austin Texas 78759(US)**
Inventor: **Johnson, Donavon William**
**212 Esparada**
**Georgetown Texas 78628(US)**
Inventor: **Smith, Todd Allen**
**1802 Apricot Glen**
**Austin Texas 78746(US)**

(74) Representative: **Ekström, Gösta E.**
**IBM Svenska AB Intellectual Property Department**
**S-163 92 Stockholm(SE)**

(54) **A system and method for version level negotiation.**

(57) The system and method of this invention enables a plurality of nodes (A,....., E) in a network to communicate with each other through a communication protocol that will be understood by any node that is a party to the present conversation. Each node may utilize a different version level of a distributed services program that allows nodes to communicate in a distributed environment. At the time a connection is initiated with another node in the network, the highest version level that both nodes have in common is determined. This common version level is then used as the protocol for any further communication.

FIG. 1

# A SYSTEM AND METHOD FOR VERSION LEVEL NEGOTIATION

This invention generally relates to improvements in operating systems for data processing systems connected through a network to provide distributed functions throughout the network, and more particularly to the protocol used during communications between the processing systems when each processing system is running different versions of the same operating system.

The invention to be described hereinafter was implemented in a version of the UNIX [1] operating system, but may be used in other operating systems having characteristics similar to the UNIX operating system. The UNIX operating system was developed by Bell Telephone Laboratories, Inc., for use on a Digital Equipment Corporation (DEC) minicomputer, but has become a popular operating system for a wide range of minicomputers and, more recently, microcomputers. One reason for this popularity is that the UNIX operating system is written in the C programming language, also developed at Bell Telephone Laboratories, rather than in assembly language so that it is not processor specific. Thus, compilers written for various machines to give them C capability make it possible to transport the UNIX operating system from one machine to another. Therefore, application programs written for the UNIX operating system environment are also portable from one machine to another. For more information on the UNIX operating system, the reader is referred to UNIX[TM] System, User's Manual, System V, published by Western Electric Co., January 1983. A good overview of the UNIX operating system is provided by Brian W. Kernighan and Rob Pike in their book entitled The Unix Programming Environment, published by Prentice-Hall (1984). A more detailed description of the design of the UNIX operating system is to be found in a book by Maurice J. Bach, Design of the Unix Operating System, published by Prentice-Hall (1986).

AT&T Bell Labs has licensed a number of parties to use the UNIX operating system, and there are now several versions available. The most current version from AT&T is version 5.2. Another version known as the Berkeley version of the UNIX operating system was developed by the University of California at Berkeley. Microsoft, the publisher of the popular MS-DOS and PC-DOS operating systems for personal computers, has a version known under their trademark as XENIX. With the announcement of the IBM RT PC [2] (RISC (reduced instruction set computer) Technology Personal Computer)) in 1985, IBM Corp. released a new operating system called AIX [3] (Advanced Interactive Executive) which is generally compatible at the application interface level with AT&T's UNIX operating system, version 5.2, and includes extensions to the UNIX operating system, version 5.2. For more description of the AIX operating system, the reader is referred to AIX Operating System Technical Reference, published by IBM Corp., First Edition (Nov. 1985).

The invention is specifically concerned with distributed data processing systems characterized by a plurality of processors interconnected in a network. As actually implemented, the invention runs on a plurality of IBM RT PCs interconnected by IBM's Systems Network Architecture (SNA), and more specifically SNA LU 6.2 Advanced Program to Program Communication (APPC). An Introduction to Advanced Program-To-Program Communication (APPC), Technical Bulletin by IBM, International Systems Center, document number GG24-1584-0, July 1983, and IBM RT PC SNA Access Method Guide and Reference, IBM, August 15, 1986, are two references that describe SNA LU 6.2.

The present RT PC implementation of SNA can use as its link level Ethernet [4], a local area network (LAN) developed by Xerox Corp., or SDLC (Synchronous Data Link Control). A simplified description of local area networks including the Ethernet local area network may be found in a book by Larry E. Jordan and Bruce Churchill entitled Communications and Networking for the IBM PC, published by Robert J. Brady (a Prentice-Hall company) (1983). A more definitive description of communications systems for computers, particularly of SNA and SDLC, is to be found in a book by R. J.

[1] Developed and licensed by AT&T. UNIX is a registered trademark of AT&T in the U.S.A. and other countries.

[2] RT and RT PC are trademarks of IBM Corporation.

[3] AIX is a trademark of IBM Corporation.

[4] Ethernet is a trademark of Xerox Corporation.

Cypser entitled Communications Architecture for Distributed Systems, published by Addison-Wesley (1978). It will, however, be understood that the invention may be implemented using other and different computers than the IBM RT PC interconnected by other networks than the Ethernet local area network or IBM's SNA.

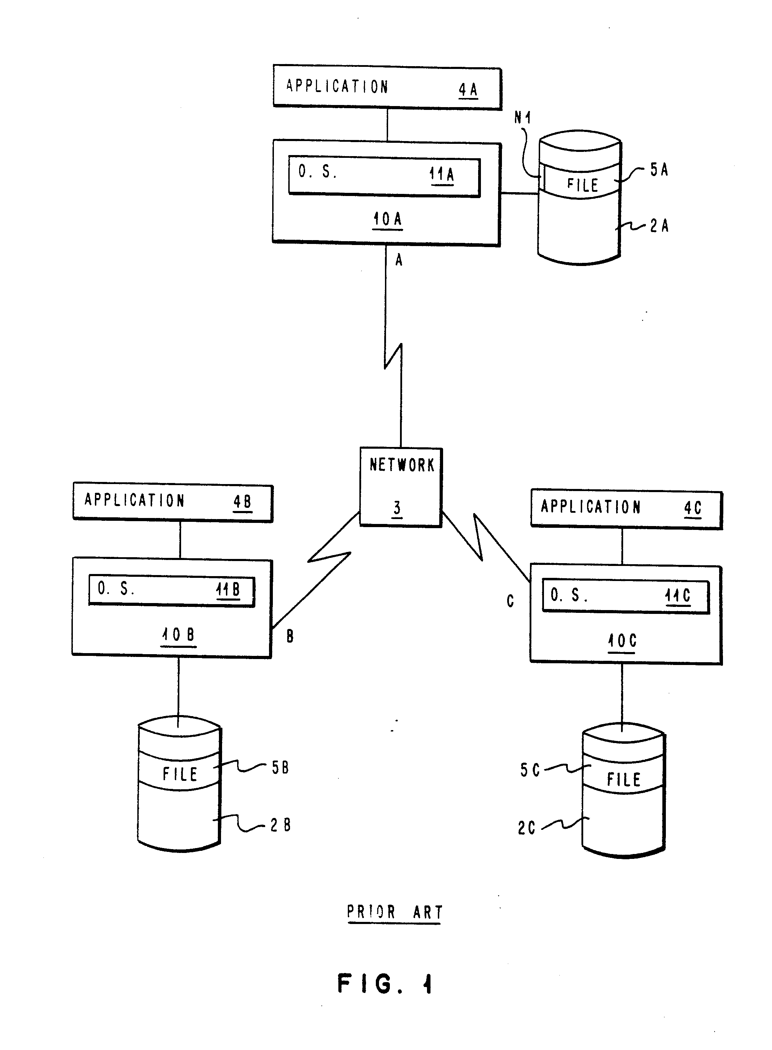

As mentioned, the invention to be described hereinafter is directed to a distributed data processing system in a communication network. In this environment, each processor at a node in the network potentially may access all the files in the network no matter at which nodes the files may reside. As shown in Figure 1, a distributed network environment 1 may consist of two or more nodes A, B and C connected through a communication link or network 3. The network 3 can be a local area network (LAN) as mentioned or a wide area network (WAN), the latter comprising a switched or leased teleprocessing (TP) connection to other nodes or to a SNA network of systems. At any of the nodes A, B or C there may be a processing system 10A, 10B or 10C, such as the aforementioned IBM RT PC. Each of these systems 10A, 10B and 10C may be a single user system or a multi-user system with the ability to use the network 3 to access files located at a remote node in the network. For example, the processing system 10A at local node A is able to access the files 5B and 5C at the remote nodes B and C.

Within this document, the term "server" will be used to indicate the node where the file is permanently stored, and the term "client" will be used to mean any other node having processes accessing the file. It is to be understood, however, that the term "server" does not mean a dedicated server as that term is used in some local area network systems. The distributed services system in which the invention is implemented is a truly distributed system supporting a wide variety of applications running at different nodes in the system which may access files located anywhere in the system.

Other approaches to supporting a distributed data processing system in a UNIX operating system environment are known. For example, Sun Microsystems has released a Network File System (NFS) and Bell Laboratories has developed a Remote File System (RFS). The Sun Microsystems NFS has been described in a series of publications including S.R. Kleiman, "Vnodes: An Architecture for Multiple File System Types in Sun UNIX", Conference Proceedings, USENIX 1986 Summer Technical Conference and Exhibition, pp. 238 to 247; Russel Sandberg et al., "Design and Implementation of the Sun Network Filesystem", Conference Proceedings, Usenix 1985, pp. 119 to 130; Dan Walsh et al., "Overview of the Sun Network File System", pp. 117 to 124; JoMei Chang, "Status Monitor Provides Network Locking Service for NFS"; JoMei Chang, "SunNet", pp. 71 to 75; and Bradley Taylor, "Secure Networking in the Sun Environment", pp. 28 to 36. The AT&T RFS has also been described in a series of publications including Andrew P. Rifkin et al., "RFS Architectural Overview", USENIX Conference Proceedings, Atlanta, Georgia (June 1986), pp. 1 to 12; Richard Hamilton et al., "An Administrator's View of Remote File Sharing", pp. 1 to 9; Tom Houghton et al., "File Systems Switch", pp. 1 to 2; and David J. Olander et al., "A Framework for Networking in System V", pp. 1 to 8.

The above described distributed systems have provided the distributed functions through extensions that were added to the currently existing operating system. Typically, the same software program may have different version and release levels. The manufacturer of a software program may first release a first level of a program that is designed to perform a certain set of functions. If the manufacturer wants to offer additional functions at a later time, the manufacturer releases a next version of the software program.

Typically, major changes to a software program are designated by a new version level, while minor changes that do not affect the overall function of the program are designated by a new release level within the same version level. For example, if additional functions were added to an existing software program, the software program would be called version two. If after version two was released, the program was again updated to correct minor errors that were found in the previous program, it would be a version two, release two program. The term version level and release level will be used interchangeably throughout to refer to any next level of the software program.

For any node in the network to take advantage of the functions that a distributed system has to offer, each node must be running on an operating system that provides for distributed services. Similar to any other program, it is foreseeable that a distributed services program will provide additional functions as time goes on, resulting in various version and release levels of the same program.

A problem arises in a distributed environment if each of the nodes has a different version level of the program that provides for distributed functions through extensions to the operating system. For example if a first node had the latest version, it could perform functions that a second node with an older version could not. The second node would not recognize a message from the first node concerning this higher level function. Had the first node known this, the first node would not have attempted to communicate with the second node at this higher function level.

One way that has been used to handle different communication protocols between two or more processing systems is to establish a configuration table for each node in the network. The configuration table contains protocol information about every other node in the network. A processing system can access the table to know the communication protocols of the other nodes. There are several problems with this method. First a system administrator is needed to input any changes or updates to the configuration table if the protocol at any other node in the network changes. Additionally, a node making an update may not know which other nodes require notice of this change. The network may be so large that all the nodes are not under the same system administrator. Also, the table takes up additional storage in the processing system. Additionally, it is time consuming to check a table before communicating with another node.

Another approach to solving this problem would be to have every node implement the same version at the same time. However to require simultaneous update throughout a large network is not feasible.

Thus, networks can be expected to have nodes running various versions and releases of the operating system, and each connection belonging to a node may be a connection to a node running a different version or release of the distributed services program.

It is therefore an object of this invention to effectively communicate between nodes having different versions of the operating system for distributed functions.

It is a further object of this invention to insure that messages sent over a connection conform to a protocol that the receiving node will understand.

It is a further object of this invention to allow a range of version levels to coexist in a network without obsoleting earlier versions, and without restricting new additional functions of later versions.

The system and method of this invention enables two nodes in a network to communicate with each other through a communication protocol that will be understood by both nodes in the network. Any given version level of the communication program defines a communication protocol for that specific version level. If a node in a network is running a version level that supports previous version levels, that node has a set of communication conventions described by the range of version levels supported.

The system and method of this invention dynamically determines the set of communication conventions to be used during a conversation with another node in the network. The set of communication conventions are dynamically determined during the first communication between the two nodes. Additionally, the dynamic determination allows the use of the highest communication protocol that both nodes have in common at any point in time.

To obtain the protocol number, i.e. version level, to be used over a connection to another node, one of the two nodes initiates a conversation on the connection. Along with the message that is sent to initiate the conversation, the node sends the highest and lowest protocol numbers that the node can use. This represents the set of communication conventions that are acceptable to the first node.

The second node also is running a specific version level that is defined by a second set of protocol numbers describing a second set of communication conventions acceptable to the second node. Upon receiving the first set of communication conventions from the first node, the second node determines if the two nodes have any protocol numbers in common. If the first and second nodes have at least one protocol number in common, the second node returns the highest protocol number that the two nodes have in common. The two nodes then communicate with each other using the communication convention described by the highest protocol number common to both nodes.

If a protocol number is not common to both nodes, then the second node returns a reply to the first node indicating that the intersection between the two sets is free of a communication convention common to both nodes. The second node then terminates the conversation with the first node.

The invention, which is defined in the attached claims, is described in detail below with reference to the attached drawings, of which;

Figure 1 is a block diagram showing a typical distributed data processing system in which the subject invention is designed to operate.

Figure 2 is a block diagram showing the distributed data processing system of this invention in which each processing system is running a different version level of a distributed communication program.

Figure 3 is a flow chart showing the steps in a version/release negotiation between two nodes to determine the communication protocol to be used during a conversation between the two nodes.

Figure 4 is a flow chart showing the steps the responding node takes in determining the highest version level common to both nodes.

When a client wants to open a file which resides on a remote server, it uses a network transport mechanism to establish a connection with the server. Subsequent transactions regarding this file (e.g., read, write, etc.) flow on this connection. Each node contains a node table. A node uses entries in its node table to record information about existing connections to remote nodes.

There are a limited number of operations that one node in the network can request another node to perform on its behalf. These operations are called dfs_operation. When a node makes a request of another node, the following operations occur: First, the requesting node sends a message which specifies which dfs_operation is being requested and carries the parameters appropriate to that request. Next, the receiving node receives the request and performs the specified operation. Finally, the receiving node sends a message which carries the reply parameters appropriate for the dfs_operation. This particular communication pattern is called a remote procedure call.

The following terms are typically used when referring to a networking environment. A connection between two nodes establishes a communication path between these nodes in the network. A conversation is a communication session between two processes on an existing connection.

Each time two nodes communicate over a connection, they use some form of protocol. The communication may be a remote procedure call (rpc) used to perform some task at the other node, or it may be more involved than a remote procedure call. The communication could be a dialog used in transmitting a long read request. In all cases, the nodes involved need to know what services can be provided by the other node's version/release of distributed services. The format of control and data fields passed to a remote node need to agree with the formats expected by the receiver. To help maintain compatibility between releases and versions of the distributed services program, later releases may support some or all of the protocols of earlier releases.

The system and method of this invention bases the communication over a connection between two nodes on the highest version and release that both nodes can support. The nodes use version release negotiation to determine the protocol that they will use when communicating with each other. Version/release negotiation is used to insure that messages sent over a connection conform to a protocol that the receiving node will understand.

For convention, the version and release number is used to define the protocol number. The protocol number may be represented with numbers such as "2" for version 2, or "3.2" for version 3 release 2, and so forth. This protocol number defines the communication conventions that are applicable to that specific version/release level of the program. A group of protocol numbers such as 2, 2.1, 3, 4, defines the set of communication conventions that a processing system at a node is able to conform to. As mentioned earlier, this situation comes about when a later version level is able to support the protocols of earlier releases for maintaining compatibility between releases.

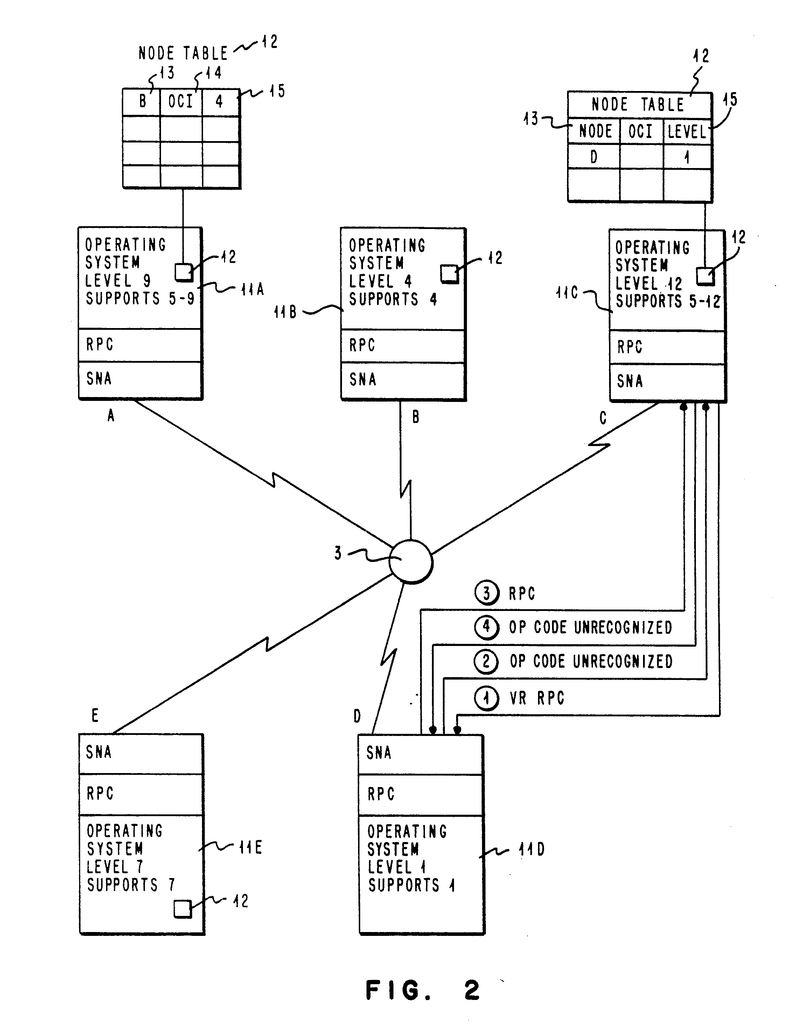

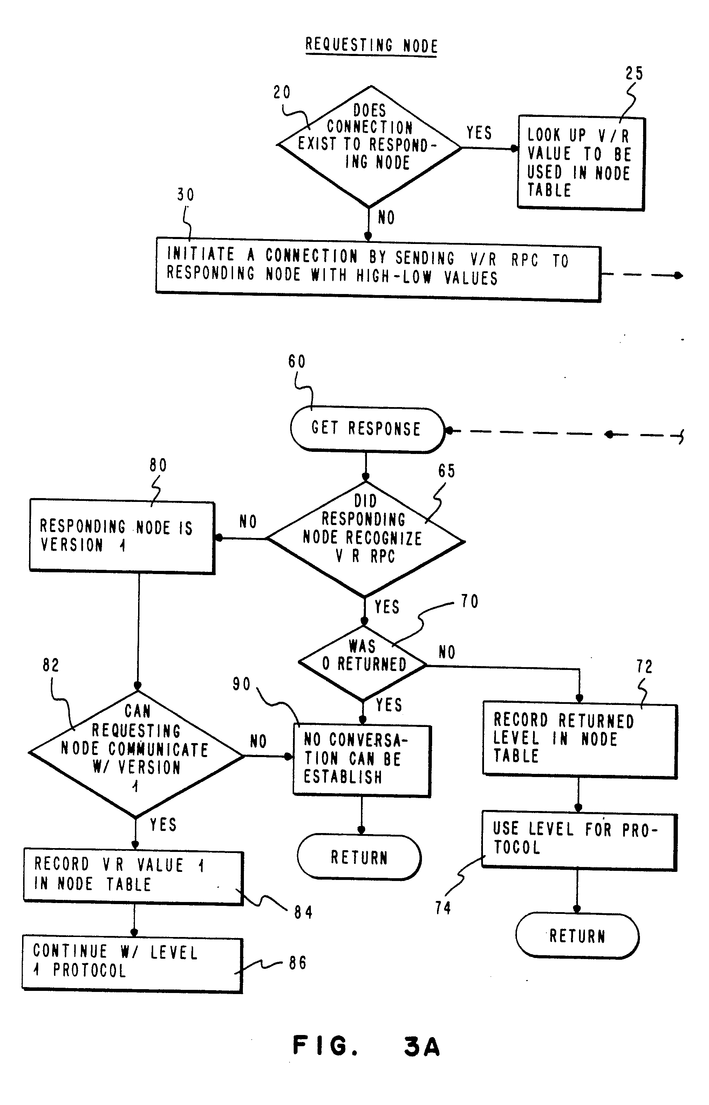

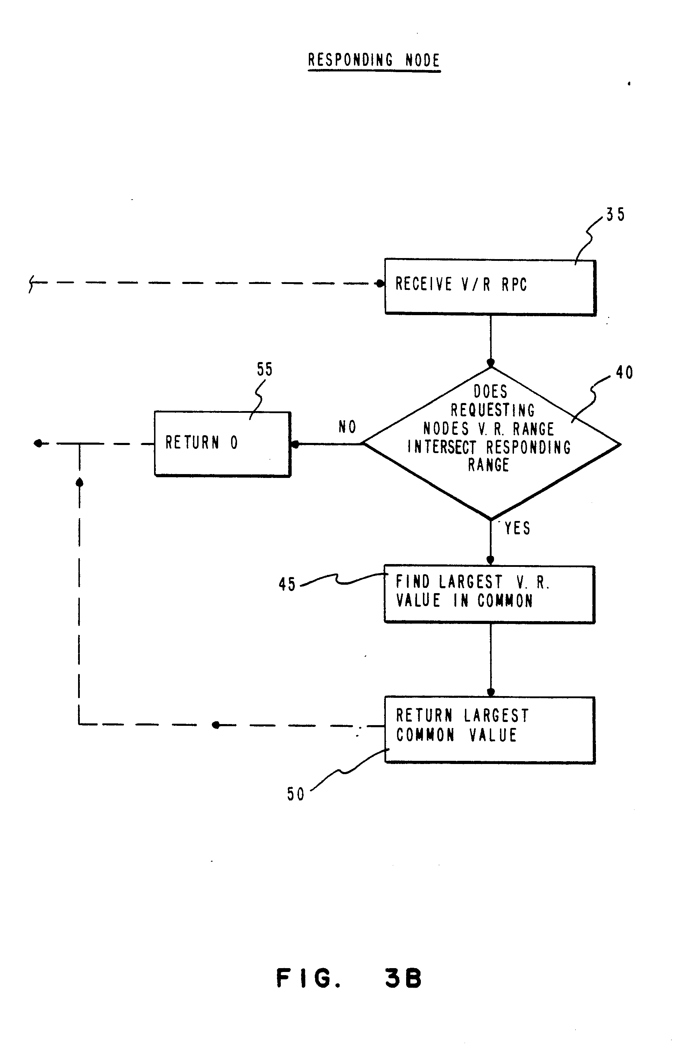

Referring to Fig. 2 showing several processing systems A, B, C, D, E connected over a network 3, and the flow chart of Fig. 3, the preferred embodiment of this invention is described as follows.

If node A wanted to communicate with node B, node A, the requesting node, would first determine if a connection already existed between node A and node B, step 20. If a connection still exists, the requesting node A would look up the previously negotiated version level value, as explained below, in the node table 12 for node B, step 25. The version level recorded in the node table 12 would be used as the communication convention between the two nodes.

If a connection does not already exist, the requesting node initiates a conversation on the connection, and sends a version release remote procedure call to the other node. The highest and lowest protocol numbers (i.e. version/release levels) that the requesting node can use is passed to the other node in the version release remote procedure call, step 30. For example, if system A were the requesting system, system A would send the values of 9 and 5 to another system in the network. The other node, referred to as the responding node, receives the version release remote procedure call, step 35, and determines if the range of version level values of the requesting node intersects with the range of values the responding node can support, step 40. If there is an intersection between the two sets, the responding node finds the highest level common to both, step 45, and returns this value to the requesting node, step 50. If the range of protocol numbers, i.e. the set of communication conventions, of the other node does not intersect the range of protocols supported by the conversation's initiator, then the value returned is zero, step 55. The returned value of zero signifies an empty set of protocols, i.e., there are no communication conventions common to both nodes.

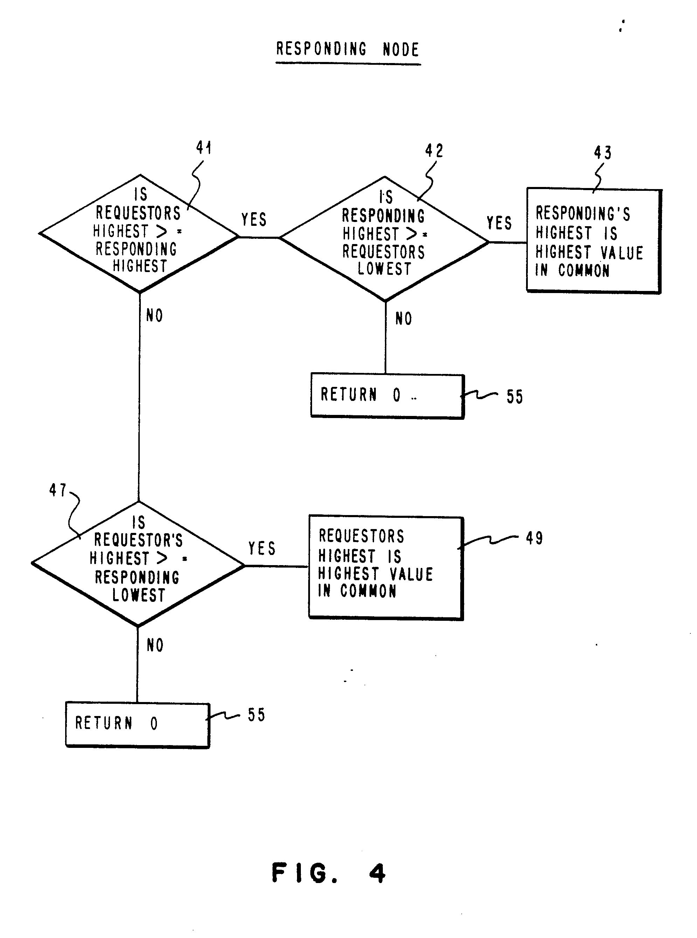

The additional steps involved in determining the intersection between the two ranges, and finding the largest value common to both as shown in steps 40 and 45 of Fig. 3, is further exemplified in Fig. 4. As shown in step 41, the responding system determines if the requestor's highest version level is greater than or equal to the responding system's highest version level. For example, if system E of Fig. 2 is responding to a version release rpc of system A, the highest level of the requesting system A is greater than or equal to the highest level of system E since level 9 is greater than level 7.

In this case, the next step would be for the responding system E to determine if the highest level of system E is greater than or equal to the lowest level of the requesting system A, step 42.

Since level 7 of system E is greater than level 5 of system A, the highest level of the responding system E which in this case is level 7 is returned to the requesting system A, step 43.

If system A had initiated a conversation with system B, then the responding system B would determine in step 42 that the highest level of the responding system B was not greater than, nor was equal to, the requestor's lowest level. In this case, the highest level of system B is level 4, and the the lowest level of system A is level 5. In this case the responding system B would return a value of zero or some other indication to notify the requesting system that there is no intersection between the set of communication conventions of each system, step 55. In other words, the intersection between the first set of communication conventions (levels 5-9) of the requesting system A and the second set of communication conventions (level 4) of the responding system B is free of communication conventions common to both system A and system B.

Going back to step 41, Fig. 4, if system B is initiating a conversation with system C, and sends system C a version/release rpc, the highest level of the requesting system B, which is level 4, is not greater than, nor is it equal to, the highest level of the responding system C, which is level 12 in this example. As per step 47, the responding system C then determines if the highest level of the requesting system B, which is level 4, is greater than or equal to the lowest level of the responding system C, which is level 5. Since level 4 is not greater than nor equal to level 5, the responding system C returns a zero to the requesting system or some other indication that the intersection of the two sets of communication conventions is null. This means that the intersection between the two sets of communication conventions are free of any communication conventions that are common to both systems.

Referring again to step 41, if system A is initiating a conversation with system C, the highest level (level 9) of the requesting system A is not greater than, nor equal to the highest level (level 9) of the responding system C. As per step 47, the highest level ( level 9) of the requesting system A is greater than the lowest level (level 5) of the responding system C. The responding system C then returns the highest level (level 9) of the requesting system, step 49.

Referring to Fig. 3, the highest common value or zero, as determined above, is returned to the requesting node, step 60. The requesting node then determines if the responding node recognized the version release remote procedure call, step 65. If it did, but zero was returned, step 70, indicating that there were no communication conventions common to both nodes, then no communication can be established with the responding node and the conversation is terminated, step 90. If a value other than zero was returned, the value is recorded in the node table, step 72, which will be used if another conversation is initiated with this same node during the present connection, step 25. The version level returned is used as the communication protocol between the two nodes, step 74.

The reason for determining whether the responding node recognized the version release rpc in step 65 is further explained. The first version/release of a program does not have to fully implement the negotiation method described above. Although the first release never needs to know the actual version level of the system at the other end, it does need a way of being told that the other system is too advanced to even talk with the first version/release system. Nevertheless, later version/release systems do need a way of discovering that they are talking to a release one level system.

The operating rules for a first version/release system are discussed below. First, when establishing a connection, the first version/release system never initiates a remote procedure call to inform the remote node of its version/release. A later version/release system that begins to receive ordinary remote procedure call requests from a system which did not first send a version/release remote procedure call knows that it is talking to a release one system. For example, system D would send an ordinary rpc as shown by arrow 3, Fig. 2 to initiate a conversation with system C. When system C receives this ordinary rpc, system C will know that it is talking to a level one system.

Second, if a version one system receives a RPC op code (remote procedure call operation code) that is reserved for requesting version release information, the version one system replies with an "op code unrecognized" error. Any other later version system that receives this reply can assume that they are talking to a release one system. For example, if system D receives a version/release rpc from system C as shown by arrow 1, system E responds with "op_code_unrecognized" as shown by arrow 2. When system C receives this "op_code_unrecognized" message, from system D, system C will know that system D is a version one system.

Third, if the later version system is so advanced that it does not know how to communicate to a release one system, the later version system replies with an "op code unrecognized" to all requests from a release one system. For example, in response to the ordinary rpc sent by system D to system C as shown by arrow 3, system C will return an "op_code unrecognized" message, arrow 4, to system D.

Therefore, if in step 65, Fig. 3 the responding node did not recognize the version release rpc, the requesting node realizes the responding node is a version level 1, step 80. The requesting node then determines if the requesting node can communicate with a version level 1, step 82. If not, no further conversation can be established, step 90, and the conversation is terminated. If the requesting node can communicate with a version level one, the requesting node records the value of 1 for the level in the node table 12, Fig. 2, for the responding node. The requesting node then communicates with the responding node using the level 1 protocol, step 86.

It is important to note that although this communication, which consists of sending a range of values by the requesting system and replying with a highest value in that range or zero, requires network traffic, the communication only needs to be done once. After the negotiation, the value returned is stored along with other connection information 14 in a node table 12 at the requesting node.

The following example illustrates the above described preferred embodiment. For example, suppose that in version 5 of a communications program a change is introduced that provides for a new file deadlock detection algorithm. System A is running version 9 which supports all previous releases that support the deadlock detection algorithm of version 5. To open a file at system B, system A prepares for a remote procedure call to a transaction program in system B. If a connection does currently exist between A and B, the remote procedure call used to establish a connection does not need to be invoked. The node table, which is a structure holding information about connections, contains the previously negotiated version/release value that will be used over the previously established connection. If no connection currently exists between system A and system B, system A calls a remote procedure call to establish a connection and perform version/release negotiation. System A will pass to system B the values 5 and 9 representing the highest and lowest versions that system A knows how to communicate with. If system B is version 4, there is no common protocol between system A and system B so the value returned indicates this. The deadlock detection algorithm will not be used if there is a connection with a node having this lower version level. If system A had initiated the conversation with system E, the returned value would be 7 since system E has a version level 7. If system A had initiated the conversation with system C having a version level of 12, which can support protocols down through version 5, the negotiated value would be 9. Consequently, the communication between system A and system C or system E can utilize the deadlock detection algorithm of this example, since these nodes have a high enough version level to support this function.

The following illustrates another embodiment of the invention which allows a requesting node to use a lower level function in an earlier release in the case where the lower level function is not supported by a later release. This allows a requesting node to communicate at a first level with a responding node for one function, and then communicate with the same responding node at another level for a different function. In this embodiment, the responding node returns the range of version releases supported by the responding node, instead of the highest level in the previous embodiment. The requesting node then determines which level within the range will be used for the communication protocol for any given operation.

For example, consider the function of renaming files. Suppose a version 5 program allows files to be renamed by relinking it to a different name with a link system call, and then unlinking the old name with an unlink system call. Further, suppose a version 6 program avoids the two step process of the version 5 program, and allows a file to be renamed all in one step using a rename system call. Different remote procedure calls are used depending on whether the version 5 function or the version 6 function is invoked. However, if a user at a requesting node had a program set up that automatically sent the two systems calls link and unlink whenever the user wanted to rename a file, it may be more convenient for the user to use the version 5 program to rename a file than to rewrite the user's program to accommodate the version 6 function.

Continuing with the above example, suppose another function allows a user to request attributes of a file. Such attributes may include size of the file, who the file owner is, time of last access, the user i.d. of the file, the group i.d. of the file, and so forth. The rpc used to request attributes of a file may always return the full status of the file with its long list of attributes in a version 5 of the program. However, the version 6 update to the program might allow a user to request a subset of attributes with the same rpc that was used for the version 5. If the rpc with a subset request was sent to the version 5, no subset of attributes would be returned since the version 5 program did not recognize this enhanced function.

Combining the above two examples, a requesting node could communicate with a responding node with the version 5 protocols for a first function such as renaming a file by linking and unlinking, and communicate with the same responding node using the version 6 protocols for a second function such as requesting attributes of a file.


## Claims

1. A system for communicating between a first node and a second node, said system comprising:

a first set of communication conventions acceptable to said first node;

a second set of communication conventions acceptable to said second node;

means for determining at least one communication convention common to the first set and the second set; and

means for communicating between the first and second node using the common communication convention.

2. The system of Claim 1 wherein the first set of communication conventions is represented by a first range of version levels, and the second set of communication conventions is represented by a second range of version levels.

3. The system of Claim 2 wherein the means for determining at least one common communication convention determines a highest version level common to the first and second set.

4. A method for communicating between a first node having a first set of communication conventions acceptable to said first node and a second node having a second set of communication conventions acceptable to said second node, said method comprising:

determining at least one of said communication conventions common to the first node and the second node; and

communicating between the first node and the second node using said common communication convention.

5. The method according to claim 4, comprising the steps of;

initiating a connection from the first node to the second node;

sending from the first node to the second node a first description of the first set;

determining at the second node if at least one element is common to the first set and the second set;

returning to the first node from the second node a description of said at least one element; and

communicating between the first node and the second node using the communication convention of said returned element.

6. The method according to claim 4, comprising the steps of;

initiating a connection from the first node to the second node;

sending from the first node to the second node a first description of the first set;

determining at the second node if at least one element is common to the first set and the second set;
and

indicating to the first node from the second node that the intersection is free of elements common to said first and second sets.

7. A method for communicating between a first node having a first set of communication conventions acceptable to said first node to request a plurality of operations to be performed by a second node having a second set of communication conventions acceptable to said second node, said method comprising;

determining at least one of said communication conventions common to said first and said second node for at least one of said operations; and

communicating between said first node and said second node using said at least one communication convention during said at least one operation.

APPLICATION 4A

O. S. 11A

10A

N1

FILE 5A

2A

A

NETWORK 3

APPLICATION 4B

O. S. 11B

10B

B

APPLICATION 4C

O. S. 11C

10C

C

FILE 5B

2B

FILE 5C

5C

2C

PRIOR ART

FIG. 1

NODE TABLE ~12

| 13 | 14 | 15 |
|---|---|---|
| B | OCI | 4 |
| | | |
| | | |
| | | |

12

NODE TABLE

13 ~

| NODE | OCI | LEVEL |
|---|---|---|
| D | | 4 |
| | | |

15

OPERATING
SYSTEM
LEVEL 9
SUPPORTS 5-9    ~11A

12

RPC

SNA

A

OPERATING
SYSTEM
LEVEL 4
SUPPORTS 4    11B

12

RPC

SNA

B

OPERATING
SYSTEM
LEVEL 12
SUPPORTS 5-12    11C

12

RPC

SNA

C

3

③ RPC

④ OP CODE UNRECOGNIZED

② OP CODE UNRECOGNIZED

① VR RPC

E

SNA

RPC

OPERATING
SYSTEM
LEVEL 7
SUPPORTS 7    ~11E

12

D

SNA

RPC

OPERATING
SYSTEM
LEVEL 4
SUPPORTS 4    ~11D

FIG. 2

REQUESTING NODE

FIG. 3A

RESPONDING NODE

RECEIVE V/R RPC  35

DOES REQUESTING NODES V.R. RANGE INTERSECT RESPONDING RANGE  40

NO

RETURN 0  55

YES

FIND LARGEST V. R. VALUE IN COMMON  45

RETURN LARGEST COMMON VALUE  50

FIG. 3B

RESPONDING NODE

FIG. 4